# EUROPÄISCHE PATENTSCHRIFT

(11) **EP 3 326 880 B1**
(45) Veröffentlichungstag und Bekanntmachung des Hinweises auf die Patenterteilung: **30.01.2019**
(21) Anmeldenummer: 17195840.8
(22) Anmeldetag: 11.10.2017
(51) Int. Cl.: B60W 20/19, B60W 20/16, B60W 10/06, B60W 10/08, F02D 41/00, F02D 41/04, F02D 41/14

(54) **VERFAHREN ZUR STEUERUNG EINES HYBRIDANTRIEBS EINES KRAFTFAHRZEUGS SOWIE HYBRIDANTRIEB EINES KRAFTFAHRZEUGS**
METHOD FOR CONTROLLING A HYBRID DRIVE OF A MOTOR VEHICLE AND HYBRID DRIVE OF A MOTOR VEHICLE
PROCÉDÉ DE COMMANDE D'UN ENTRAÎNEMENT HYBRIDE D'UN VÉHICULE AUTOMOBILE ET ENTRAÎNEMENT HYBRIDE D'UN VÉHICULE AUTOMOBILE

(30) Priorität: 29.11.2016 DE 102016223632
(43) Veröffentlichungstag der Anmeldung: 30.05.2018
(73) Patentinhaber: Bayerische Motoren Werke Aktiengesellschaft, 80809 München (DE)
(72) Erfinder: Bruene, Hans-Juergen, 3350 Haag (AT); Azarov, Denis, 4020 Linz (AT)

(56) Entgegenhaltungen:
- EP-A1- 1 743 794
- EP-A2- 2 476 595
- DE-A1- 19 532 128
- DE-A1-102004 039 838
- DE-A1-102004 058 231

## Beschreibung

Die Erfindung betrifft ein Verfahren zur Steuerung eines Hybridantriebs eines Kraftfahrzeugs sowie einen Hybridantrieb eines Kraftfahrzeugs.

Aus dem Stand der Technik sind Kraftfahrzeuge bekannt, die einen Hybridantrieb aufweisen. Ein Hybridantrieb zeichnet sich dadurch aus, dass er einen Verbrennungsmotor sowie einen elektrischen Antrieb umfasst, die beide zum Antrieb des Kraftfahrzeugs eingesetzt werden.

Üblicherweise wird der elektrische Antrieb bei einem Hybridantrieb verwendet, um die Emissionen des Verbrennungsmotors und somit des Kraftfahrzeugs zu reduzieren. Dementsprechend entlastet der elektrische Antrieb den Verbrennungsmotor in gewissen Betriebszuständen des Hybridantriebs. Üblicherweise sind stationäre Betriebspunkte in einer Steuerungseinheit des Kraftfahrzeugs hinterlegt, zu denen der elektrische Antrieb ein Drehmoment zum Gesamtdrehmoment des Kraftfahrzeugs beiträgt bzw. aufgeladen wird.

Als nachteilig hat sich hierbei herausgestellt, dass die Emissionen des Verbrennungsmotors nicht in optimaler Weise gesenkt werden, da es schwierig ist, die vorab definierten Betriebspunkte so zu wählen, dass die Emission minimal sind.

Aus der EP 1 743 794 A1 ist ein Verfahren zur Steuerung eines Hybridantriebs bekannt, bei dem eine Verbrennungskraftmaschine und ein Elektromotor gemeinsam zum Antrieb eines Hybridfahrzeugs benutzt werden. Bei einer Veränderung der Antriebsleistung infolge Lastpunktverschiebung wird die bei der Verbrennungskraftmaschine auftretende Verzögerung der Umsetzung von Soll- in Istmoment durch eine Steuereinrichtung vorausberechnet. Um die Verzögerung der Verbrennungskraftmaschine zu kompensieren, wird der Elektromotor aktiviert.

In der EP 2 476 595 A2 ist ein Verfahren zum Betrieb eines Hybridantriebs gezeigt, das zur Gewährleistung eine kraftstoffverbrauchsreduzierten und emissionsreduzierten Betriebs des Hybridfahrzeugs eine Momentanforderung an die Verbrennungskraftmaschine verzögern oder reduzieren kann, wobei die Momentanforderung durch den Elektromotor kompensiert wird.

Die Aufgabe der Erfindung ist es, einen Hybridantrieb sowie ein Verfahren zur Steuerung eines Hybridantriebs bereitzustellen, sodass die Emissionen des Verbrennungsmotors minimiert sind.

Die Aufgabe wird erfindungsgemäß durch ein Verfahren zur Steuerung eines Hybridantriebs eines Kraftfahrzeugs gelöst, der einen Verbrennungsmotor und einen elektrischen Antrieb umfasst, mit den folgenden Schritten:
- Erkennen eines dynamischen Zustands des Verbrennungsmotors, insbesondere einer Beschleunigung des Kraftfahrzeugs, indem ein Spülgefälle des Verbrennungsmotors und/oder das Verbrennungsluftverhältnis über die Differenz zwischen einer aktuellen Einspritzmenge des Verbrennungsmotors und einer begrenzenden Einspritzmenge ermittelt wird, insbesondere ein Absinken des Verbrennungsluftverhältnisses erfasst wird,
- Priorisieren des elektrischen Antriebs des Hybridantriebs, sofern ein dynamischer Zustand erkannt worden ist.

Ferner wird die Aufgabe erfindungsgemäß durch einen Hybridantrieb eines Kraftfahrzeugs gelöst, mit einem Verbrennungsmotor, einem elektrischen Antrieb und einer Steuerungseinheit, die eingerichtet ist, einen dynamischen Zustand des Verbrennungsmotors zu erkennen, indem die Steuerungseinheit ein Spülgefälle des Verbrennungsmotors und/oder das Verbrennungsluftverhältnis über die Differenz zwischen einer aktuellen Einspritzmenge des Verbrennungsmotors und einer begrenzenden Einspritzmenge ermittelt, insbesondere ein Absinken des Verbrennungsluftverhältnisses erfasst. Ferner ist die Steuerungseinheit eingerichtet, den elektrischen Antrieb zu priorisieren, sofern ein dynamischer Zustand erkannt worden ist.

Der Grundgedanke der Erfindung ist es, die Emissionen, beispielsweise Kohlenstoffdioxid- (CO₂) und Stickstoffoxid (NOₓ)-Emissionen, am effektivsten dadurch zu senken, dass der elektrische Antrieb den Verbrennungsmotor in einem dynamischen Zustand des Kraftfahrzeugs entlastet, also wenn das Kraftfahrzeug gerade beschleunigt. Bei einem Beschleunigen des Kraftfahrzeugs ist unter anderem die Differenz zwischen der aktuellen Einspritzmenge und der begrenzenden Einspritzmenge, über die auf das Verbrennungsluftverhältnis geschlossen werden kann, charakteristisch für den Zustand des Verbrennungsmotors, insbesondere den Verbrennungsverlauf, sodass der dynamische Zustand schnell erkannt werden kann. Die Differenz der aktuellen Einspritzmenge und der begrenzenden Einspritzmenge kann auch als Einspritzmengen-Differenz bezeichnet werden, über die sich der dynamische Zustand erfassen lässt, da die aktuelle Einspritzmenge beim Beschleunigen (dynamischer Zustand) schlagartig steigt, wodurch die Einspritzmengen-Differenz ebenfalls entsprechend ansteigt. Die Einspritzmengen-Differenz sinkt im dynamischen Fall, weil die eingespritzte Einspritzmenge mehr ansteigt als die begrenzende Einspritzmenge. Dementsprechend sinkt das Verbrennungsluftverhältnis.

Die begrenzende Einspritzmenge lässt sich in Abhängigkeit vom Verbrennungsluftverhältnis ermitteln.

Das Verbrennungsluftverhältnis wird generell auch als Luft-Kraftstoff-Verhältnis (λ) oder Luftzahl bezeichnet und stellt unter anderem einen direkten Zusammenhang zwischen einer Einspritzmenge, einem Ladedruck und einer Abgasrückführungsrate her. Der Ladedruck kann beim Beschleunigen nicht sofort den vorgesehenen Sollwert erreichen, wohingegen die aktuelle Einspritzmenge beim Beschleunigen schlagartig angehoben wird. Hierdurch sinkt das Verbrennungsluftverhältnis entsprechend, was erfasst wird. Aufgrund des niedrigen Verbrennungsluftverhältnisses verschlechtert sich der Wirkungsgrad des Verbrennungsmotors und als Folge dessen erhöht sich die Kohlenstoffdioxid-Emission, was nachteilig ist. Zudem sollte aufgrund des sinkenden Verbrennungsluftverhältnisses die Abgasrückführungsrate reduziert werden, was jedoch zu einer Erhöhung der Stickstoffoxid-Emission führt. Dies ist ebenfalls nachteilig. Daher wird beim Absinken des Verbrennungsluftverhältnisses der elektrische Antrieb verwendet, um die Emissionen zu reduzieren.

Das Verbrennungsluftverhältnis wird folglich ermittelt, bevor bzw. während der Kraftstoff im Verbrennungsmotor verbrannt wird. Demnach wird das Verbrennungsluftverhältnis gerade nicht im Abgasbereich ermittelt, da dann der elektrische Antrieb nicht verwendet werden könnte, um den Verbrennungsmotor im dynamischen Zustand zu entlasten, um die Emissionen zu reduzieren.

Demnach kann das Verbrennungsluftverhältnis bzw. die Einspritzmengen-Differenz als Maß für die Dynamik bzw. als Maß für die Güte der Verbrennung im Verbrennungsmotor verwendet werden. Mit anderen Worten kann über das Verbrennungsluftverhältnis bzw. die Differenz zwischen der aktuellen Einspritzmenge des Verbrennungsmotors und der begrenzenden Einspritzmenge auf den Wirkungsgrad des Verbrennungsmotors geschlossen werden. Somit ist es möglich, die vom elektrischen Antrieb bereitgestellte elektrische Energie gezielt zu verwenden, um in den transienten Phasen, also kurzzeitig auftretende Beschleunigungen, den Verbrennungsmotor zu entlasten, wodurch die Emissionen des Verbrennungsmotors gesenkt werden können.

Alternativ oder ergänzend kann das Spülgefälle des Verbrennungsmotors ermittelt werden, um auf den dynamischen Zustand zu schließen. Insbesondere kann die vorherige Erkennung des dynamischen Zustands über die Einspritzmengen-Differenz überprüft werden. Über das Spülgefälle des Verbrennungsmotors können Ladungswechselverluste festgestellt werden, insbesondere deren Veränderung. Das erhöhte Spülgefälle verursacht wiederum eine erhöhte Ladungswechselarbeit, die mit entsprechenden Ladungswechselverlusten einhergeht, aufgrund derer die Emissionen steigen würden, was vermieden werden soll.

Der Hybridantrieb kann dementsprechend einen Turbolader aufweisen, der den Ladedruck aufbaut.

Gemäß einem Aspekt wird die Differenz zwischen einem aktuellen Ladedruck und einem Sollwert des Ladedrucks ermittelt, worüber die Erkennung des dynamischen Zustands überprüft wird und/oder wobei die Differenz als Steuergröße herangezogen wird.

Generell kann die Steuerungseinheit eingerichtet sein, die Differenz zwischen einem aktuellen Ladedruck und einem Sollwert des Ladedrucks zu ermitteln.

Diese Differenz kann auch als Ladedruck-Differenz bezeichnet werden, über die ebenfalls auf einen dynamischen Zustand geschlossen werden kann. Aufgrund des oben geschilderten Verhaltens des Verbrennungsmotors beim Beschleunigen kann über den Ladedruck, insbesondere die Ladedruck-Differenz, auf einen dynamischen Zustand und somit auf die Emissionen des Kraftfahrzeugs geschlossen werden.

Ferner kann die Differenz zwischen einer aktuellen Abgasrückführungsrate und einem Sollwert der Abgasrückführungsrate ermittelt werden, worüber die Erkennung des dynamischen Zustands überprüft wird und/oder wobei die Differenz als Steuergröße herangezogen wird.

In analoger kann die Steuerungseinrichtung eingerichtet sein, die Differenz zwischen einer aktuellen Abgasrückführungsrate und einem Sollwert der Abgasrückführungsrate zu ermitteln.

Diese Differenz lässt sich als Abgasrückführungsrate-Differenz bezeichnen, aufgrund derer ebenfalls auf einen dynamischen Zustand geschlossen werden kann. Aufgrund des oben geschilderten Verhaltens des Verbrennungsmotors beim Beschleunigen kann über die Abgasrückführungsrate, insbesondere die Abgasrückführungsrate-Differenz, auf einen dynamischen Zustand und somit auf die Emissionen des Kraftfahrzeugs geschlossen werden. Bei dem Sollwert der Abgasrückführungsrate handelt es sich beispielsweise um denjenigen für den stationären Zustand.

Gemäß einem weiteren Aspekt wird die Differenz zwischen einem Abgasgegendruck und einem Ladedruck erfasst, um das Spülgefälle zu ermitteln. Diese Differenz kann als Druckdifferenz bezeichnet werden. Beim Beschleunigen schließt eine Klappe des Turboladers bzw. ein Ventil des Turboladers, was auch als Leitapparat bezeichnet werden kann, wodurch der Abgasgegendruck ansteigt. Der ansteigende Abgasgegendruck wiederum hat ein erhöhtes Spülgefälle zur Folge. Der Abgasgegendruck lässt sich ebenso wie der Ladedruck leicht über entsprechende Sensoren ermitteln, sodass auf das Spülgefälle geschlossen werden kann.

Generell lässt sich das Spülgefälle demnach aufgrund einer Ladedruckabweichung ermitteln, insbesondere aufgrund des vorliegenden Abgasgegendrucks.

Alternativ oder ergänzend kann die Stellung eines Leitapparats der Turbine erfasst werden, um das Spülgefälle zu ermitteln. Über die Stellung des Leitapparats, also der Klappe bzw. des Ventils, kann ebenfalls der dynamische Zustand ermittelt werden, da der Leitapparat der Turbine eines Abgasturboladers beim Beschleunigen (weiter als im stationären Fall) geschlossen wird, wodurch der hohe Abgasgegendruck entsteht, der das Spülgefälle erhöht. Es lässt sich also die Stellung des Leitapparats erfassen, da hierüber auf den entsprechenden Abgasgegendruck geschlossen werden kann, der wiederum das Spülgefälle beeinflusst.

Gemäß einem Aspekt ist ein Einspritzsystem des Verbrennungsmotors vorgesehen, mit dem die Steuerungseinheit verbunden ist. Hierdurch kann die Steuerungseinheit auf die vom Einspritzsystem verwendeten Einspritzmengen zugreifen.

Insbesondere weist das Einspritzsystem wenigstens einen Sensor auf, der die aktuelle Einspritzmenge, die Stellung eines Leitapparats, den Abgasgegendruck und/oder den Ladedruck erfasst. Hierdurch ist es in einfacher Weise möglich, die Einspritzmenge, insbesondere die aktuelle Einspritzmenge zu erfassen und die Daten an die Steuerungseinheit zu übermitteln. Die eingespritzte Menge wird beispielsweise aufgrund der Ansteuerungsdauer des Injektors und dem Raildrucksensor ermittelt, wobei die Ansteuerungsdauer des Injektors mit Hilfe des gemessenen Stroms und der gemessenen Spannung berechnet wird.

Generell kann die Steuerungseinheit eingerichtet sein, das zuvor genannte Verfahren durchzuführen. Hierdurch ist sichergestellt, dass die vom Verbrennungsmotor erzeugten Emissionen im Regelbetrieb des Kraftfahrzeugs minimiert sind, da der elektrische Antrieb dann verwendet wird, wenn sich das Kraftfahrzeug in einem dynamischen Zustand befindet. Dies wird anhand der Einspritzmengen-Differenz ermittelt.

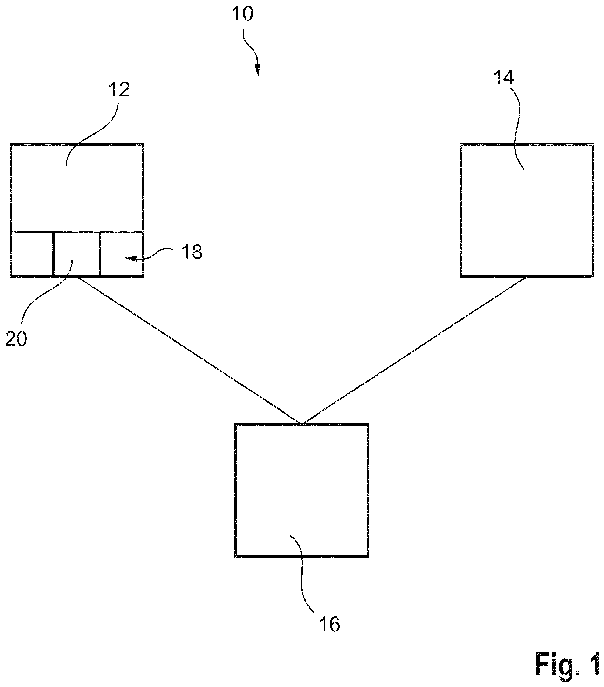

Weitere Vorteile und Eigenschaften der Erfindung ergeben sich aus der nachfolgenden Beschreibung und den Zeichnungen, auf die Bezug genommen wird. In der einzigen Figur ist eine schematische Darstellung eines erfindungsgemäßen Hybridantriebs gezeigt.

In der Figur ist ein Hybridantrieb 10 eines Kraftfahrzeugs gezeigt, der einen Verbrennungsmotor 12 und einen elektrischen Antrieb 14 umfasst.

Ferner ist eine Steuerungseinheit 16 vorgesehen, die sowohl mit dem Verbrennungsmotor 12 als auch mit dem elektrischen Antrieb 14 gekoppelt ist, sodass über die Steuerungseinheit 16 sowohl Daten vom Verbrennungsmotor 12 als auch Daten vom elektrischen Antrieb 14 erfasst werden können. Zudem ist die Steuerungseinheit 16 ausgebildet, zumindest den elektrischen Antrieb 14 anzusteuern.

Der Verbrennungsmotor 12 umfasst ein Einspritzsystem 18, welches einen Sensor 20 aufweist, über den die vom Einspritzsystem 18 den Verbrennungsmotor 12, insbesondere den einzelnen Zylindern des Verbrennungsmotors 12, zugeführte Einspritzmenge zu erfassen. Die vom Sensor 20 erfassten Daten werden an die Steuerungseinheit 16 übermittelt, die mit dem Einspritzsystem 18 verbunden ist.

Die Steuerungseinheit 16 ist aufgrund der ihr übermittelten Daten in der Lage, einen dynamischen Zustand des Verbrennungsmotors 12 zu erkennen, aufgrund dessen die Steuerungseinheit 16 den elektrischen Antrieb 14 derart ansteuert, dass der elektrische Antrieb 14 den Verbrennungsmotor 12 entlastet, sofern die Steuerungseinheit 16 einen dynamischen Zustand des Verbrennungsmotors 12 erkannt hat, also eine Beschleunigung des Kraftfahrzeugs.

Hierzu ermittelt die Steuereinheit 16 das Verbrennungsluftverhältnis, welches im Verbrennungsmotor 12 vorliegen wird, insbesondere in den jeweiligen Zylindern des Verbrennungsmotors 12. Über das Verbrennungsluftverhältnis kann auf einen dynamischen Zustand des Verbrennungsmotors 12 geschlossen werden.

Das Verbrennungsluftverhältnis wird dabei vor dem Verbrennen des Kraftstoffs ermittelt, sodass der elektrische Antrieb 14 noch so angesteuert werden kann, dass er den Verbrennungsmotor 12 beim entsprechend erkannten dynamischen Zustand des Kraftfahrzeugs entlastet. Das Verbrennungsluftverhältnis ist somit ein Maß für die Dynamik.

Beim Beschleunigen sinkt beispielsweise das Verbrennungsluftverhältnis ab, was entsprechend erfasst wird, da beispielsweise schlagartig die aktuelle Einspritzmenge ansteigt, wohingegen der Ladedruck beim Beschleunigen nicht sofort den vorgesehenen Sollwert erreicht.

Beispielsweise greift die Steuereinheit 16 zur Bestimmung des dynamischen Zustands auf die vom Sensor 20 des Einspritzsystems 18 übermittelten Daten hinsichtlich der aktuellen Einspritzmenge zu, um die Differenz zwischen der aktuellen Einspritzmenge des Verbrennungsmotors 12 und einer begrenzenden Einspritzmenge zu ermitteln, die auch als Einspritzmengen-Differenz bezeichnet werden kann. Aufgrund dieser Einspritzmengen-Differenz kann auf den dynamischen Zustand geschlossen werden.

Alternativ oder ergänzend zum detektierten Verbrennungsluftverhältnis aufgrund der Einspritzmengen-Differenz kann der dynamische Zustand des Hybridantriebs 10 bzw. des Kraftfahrzeugs aufgrund eines Spülgefälles des Verbrennungsmotors 12 erkannt werden. Insbesondere lässt sich die vorherige Erkennung des dynamischen Zustands über die Einspritzmengen-Differenz so überprüfen.

Das Spülgefälle des Verbrennungsmotors 12 ist ein Indikator für im Verbrennungsmotor 12 auftretende Ladungswechselverluste, insbesondere deren Veränderung, die ebenfalls für erhöhte Emissionen verantwortlich sind.

Das Spülgefälle lässt sich über die Differenz zwischen einem Abgasgegendruck und einem Ladedruck erfassen. Diese Differenz kann auch als Druckdifferenz bezeichnet werden. Beim Beschleunigen schließt der Leitapparat eines mit dem Verbrennungsmotor 12 gekoppelten Turboladers, also eine Klappe bzw. ein Ventil. Dies führt zu einem Anstiegt des Abgasgegendrucks, wodurch sich ein erhöhtes Spülgefälle einstellt.

Der Hybridantrieb 10 umfasst entsprechende Sensoren, die den vorliegenden Abgasgegendruck und/oder den vorliegenden Ladedruck ermitteln, sodass auf das vorliegende Spülgefälle geschlossen werden kann, über das der dynamische Zustand erkannt wird. In Abhängigkeit vom vorliegenden Abgasgegendruck lässt sich das Spülgefälle somit aufgrund einer detektierten Ladedruckabweichung ermitteln.

Das Spülgefälle lässt sich auch über die Stellung des Leitapparats der Turbine des Turboladers erfassen. Wie bereits erläutert, gibt die Stellung des Leitapparats, also die der Klappe bzw. des Ventils, vor, wie hoch der Abgasgegendruck ist, der Einfluss auf das Spülgefälle hat. Dementsprechend lässt sich hierdurch der dynamische Zustand ermitteln. Die Stellung des Leitapparats kann ebenfalls über einen entsprechenden Sensor erfasst werden.

Der Hybridantrieb 10 kann somit einen Turbolader mit Turbine aufweisen, der mit dem Verbrennungsmotor 12 gekoppelt ist.

Darüber hinaus ist die Steuerungseinheit 16 derart eingerichtet, dass sie die Differenz zwischen einem aktuellen Ladedruck und einem Sollwert des Ladedrucks ermittelt. Diese Differenz, welche auch als Ladedruck-Differenz bezeichnet werden kann, ist ebenfalls geeignet, um als ein Maß für einen dynamischen Zustand zu dienen. Dementsprechend kann die Ladedruck-Differenz als zusätzliche Steuergröße und/oder als Überprüfung herangezogen werden, ob der dynamische Zustand aufgrund der Einspritzmenge-Differenz bzw. des Spülgefälles korrekt festgestellt worden ist.

In analoger Weise ist die Steuerungseinheit 16 eingerichtet, die Differenz zwischen einer aktuellen Abgasrückführungsrate und einem Sollwert der

Abgasrückführungsrate zu ermitteln. Die Differenz kann als Abgasrückführungsrate-Differenz bezeichnet werden. Auch diese Abgasrückführungsrate-Differenz kann als Maß für die Güte der Verbrennung des Verbrennungsmotors 12 bzw. als Maß für den Wirkungsgrad des Verbrennungsmotors 12 dienen. Aufgrund der Abgasrückführungsrate-Differenz lässt sich somit in analoger Weise überprüfen, ob die Erkennung des dynamischen Zustands aufgrund der Einspritzmengen-Differenz bzw. des Spülgefälles korrekt ist. Ferner kann die Abgasrückführungsrate-Differenz als zusätzliche Steuergröße verwendet werden.

Generell lässt die Einspritzmengen-Differenz sowie das vorliegende Spülgefälle direkte Rückschlüsse auf die Stickstoffoxid- bzw. Kohlenstoffdioxid-Emissionen des Verbrennungsmotors 12 zu, die bei einem dynamischen Zustand des Verbrennungsmotors 12 auftreten, also bei einem Beschleunigen des Kraftfahrzeugs. Aufgrund dessen ist der Hybridantrieb 10, insbesondere die Steuerungseinheit 16, in der Lage, den elektrischen Antrieb 14 so anzusteuern, dass der elektrische Antrieb 14 den Verbrennungsmotor 12 in den dynamischen Zuständen entlastet, in denen die Emissionen am höchsten sind, also beim Beschleunigen des Kraftfahrzeugs.

Hierdurch ist es möglich, die beim Betrieb des Kraftfahrzeugs entstehenden Emissionen auf ein Minimum zu reduzieren, da der elektrische Antrieb 14 dazu verwendet wird, den Verbrennungsmotor 12 dann zu entlasten, wenn dieser die höchsten Emissionen hat.

## Patentansprüche

1. Verfahren zur Steuerung eines Hybridantriebs (10) eines Kraftfahrzeugs, der einen Verbrennungsmotor (12) und einen elektrischen Antrieb (14) umfasst, mit den folgenden Schritten:
a) Erkennen eines dynamischen Zustands des Verbrennungsmotors (12), insbesondere einer Beschleunigung des Kraftfahrzeugs, indem ein Spülgefälle des Verbrennungsmotors (12) ermittelt wird und/oder das Verbrennungsluftverhältnis über die Differenz zwischen einer aktuellen Einspritzmenge des Verbrennungsmotors (12) und einer begrenzenden Einspritzmenge ermittelt wird, insbesondere ein Absinken des Verbrennungsluftverhältnisses erfasst wird,
b) Priorisieren des elektrischen Antriebs (14) des Hybridantriebs (10), sofern ein dynamischer Zustand erkannt worden ist.

2. Verfahren nach Anspruch 1, **dadurch gekennzeichnet, dass** die Differenz zwischen einem aktuellen Ladedruck und einem Sollwert des Ladedrucks ermittelt wird, worüber die Erkennung des dynamischen Zustands überprüft wird und/oder wobei die Differenz als Steuergröße herangezogen wird.

3. Verfahren nach einem der vorhergehenden Ansprüche, **dadurch gekennzeichnet, dass** die Differenz zwischen einer aktuellen Abgasrückführungsrate und einem Sollwert der Abgasrückführungsrate ermittelt wird, worüber die Erkennung des dynamischen Zustands überprüft wird und/oder wobei die Differenz als Steuergröße herangezogen wird.

4. Verfahren nach einem der vorhergehenden Ansprüche, **dadurch gekennzeichnet, dass** die Differenz zwischen einem Abgasgegendruck und einem Ladedruck und/oder die Stellung eines Leitapparats einer Turbine eines Abgasturboladers erfasst wird, um das Spülgefälle zu ermitteln.

5. Hybridantrieb (10) eines Kraftfahrzeugs, mit einem Verbrennungsmotor (12), einem elektrischen Antrieb (14) und einer Steuerungseinheit (16), die eingerichtet ist, einen dynamischen Zustand des Verbrennungsmotors (12) zu erkennen, indem die Steuerungseinheit (16) ein Spülgefälle und/oder das Verbrennungsluftverhältnis über die Differenz zwischen einer aktuellen Einspritzmenge des Verbrennungsmotors (12) und der begrenzenden Einspritzmenge ermittelt, insbesondere ein Absinken des Verbrennungsluftverhältnisses erfasst, wobei die Steuerungseinheit (16) eingerichtet ist, den elektrischen Antrieb (14) zu priorisieren, sofern ein dynamischer Zustand erkannt worden ist.

6. Hybridantrieb (10) nach Anspruch 5, **dadurch gekennzeichnet, dass** ein Einspritzsystem (18) des Verbrennungsmotors (12) vorgesehen ist, mit dem die Steuerungseinheit (16) verbunden ist.

7. Hybridantrieb (10) nach Anspruch 6, **dadurch gekennzeichnet, dass** das Einspritzsystem (18) wenigstens einen Sensor (20) aufweist, der die aktuelle Einspritzmenge, die Stellung eines Leitapparats, den Abgasgegendruck und/oder den Ladedruck erfasst.

8. Hybridantrieb (10) nach einem der Ansprüche 5 bis 7, **dadurch gekennzeichnet, dass** die Steuerungseinheit (16) eingerichtet ist, die Differenz zwischen einem aktuellen Ladedruck und einem Sollwert des Ladedrucks zu ermitteln.

9. Hybridantrieb (10) nach einem der Ansprüche 5 bis 8, **dadurch gekennzeichnet, dass** die Steuerungseinheit (16) eingerichtet ist, die Differenz zwischen einer aktuellen Abgasrückführungsrate und einem Sollwert der Abgasrückführungsrate zu ermitteln.

10. Hybridantrieb (10) nach einem der Ansprüche 5 bis 9, **dadurch gekennzeichnet, dass** die Steuerungseinheit (16) eingerichtet ist, das Verfahren nach einem der Ansprüche 1 bis 4 durchzuführen.

## Claims

1. A method for controlling a hybrid drive (10) of a motor vehicle which comprises an internal combustion engine (12) and an electric drive (14), having the following steps:
a) recognising a dynamic state of the internal combustion engine (12), especially an acceleration of the motor vehicle, in that a scavenging gradient of the internal combustion engine (12) is ascertained and/or the combustion-air ratio is ascertained by means of the difference between a current injection rate of the internal combustion engine (12) and a limiting injection rate, especially a lowering of the combustion-air ratio is detected,
b) prioritising the electric drive (14) of the hybrid drive (10) provided that a dynamic state has been recognised.

2. A method according to Claim 1, **characterised in that** the difference between a current boost pressure and a desired value of the boost pressure is ascertained, by means of which the recognition of the dynamic state is checked and/or wherein the difference is used as a controlled variable.

3. A method according to one of the preceding claims, **characterised in that** the difference between a current exhaust-gas recirculation rate and a desired value of the exhaust-gas recirculation rate is ascertained, by means of which the recognition of the dynamic state is checked and/or wherein the difference is used as a controlled variable.

4. A method according to one of the preceding claims, **characterised in that** the difference between an exhaust back-pressure and a boost pressure and/or the position of a guide-vane system of a turbine of an exhaust gas turbocharger is detected in order to ascertain the scavenging gradient.

5. A hybrid drive (10) of a motor vehicle, with an internal combustion engine (12), an electric drive (14) and a control unit (16) which is set up to recognise a dynamic state of the internal combustion engine (12), in that the control unit (16) ascertains a scavenging gradient and/or the combustion-air ratio by means of the difference between a current injection rate of the internal combustion engine (12) and the limiting injection rate, especially detects a drop in the combustion-air ratio, wherein the control unit (16) is set up to prioritise the electric drive (14) provided that a dynamic state has been recognised.

6. A hybrid drive (10) according to Claim 5, **characterised in that** an injection system (18) of the internal combustion engine (12) is provided to which the control unit (16) is connected.

7. A hybrid drive (10) according to Claim 6, **characterised in that** the injection system (18) has at least one sensor (20) which detects the current injection rate, the position of a guide-vane system, the exhaust back-pressure and/or the boost pressure.

8. A hybrid drive (10) according to one of Claims 5 to 7, **characterised in that** the control unit (16) is set up to ascertain the difference between a current boost pressure and a desired value of the boost pressure.

9. A hybrid drive (10) according to one of Claims 5 to 8, **characterised in that** the control unit (16) is set up to ascertain the difference between a current exhaust-gas recirculation rate and a desired value of the exhaust-gas recirculation rate.

10. A hybrid drive (10) according to one of Claims 5 to 9, **characterised in that** the control unit (16) is set up to carry out the method according to one of Claims 1 to 4.

## Revendications

1. Procédé de commande d'un entraînement hybride (10) d'un véhicule qui comporte un moteur à combustion interne (12) et un entraînement électrique (14) comprenant les étapes suivantes consistant à :
a) identifier un état dynamique du moteur à combustion interne (12), en particulier une accélération du véhicule en déterminant un gradient de balayage du moteur à combustion interne (12), et/ou en déterminant le rapport d'air de combustion par la différence entre la quantité d'injection actuelle du moteur à combustion interne (12) et une quantité d'injection limite, en particulier en détectant une chute du rapport d'air de combustion,
b) donner priorité à l'entraînement électrique (14) du moteur hybride (10) dans la mesure où un état dynamique a été identifié.

2. Procédé conforme à la revendication 1,
**caractérisé en ce qu'**
on détermine la différence entre la pression de charge actuelle et une valeur de consigne de la pression de charge à partir de laquelle l'identification de l'état dynamique est contrôlée et/ou la différence est utilisée en tant que grandeur de commande.

3. Procédé conforme à l'une des revendications précédentes, **caractérisé en ce qu'**
on détecte la différence entre le taux de recirculation des gaz d'échappement actuel et une valeur de consigne du taux de recirculation des gaz d'échappement à partir de laquelle l'identification de l'état dynamique est contrôlé et/ou la différence est utilisée en tant que grandeur de commande.

4. Procédé conforme à l'une des revendications précédentes, **caractérisé en ce qu'**
on détecte la différence entre la contre-pression des gaz d'échappement et la pression de charge et/ou la position d'un appareil de guidage d'une turbine d'un turboréacteur de gaz d'échappement pour déterminer le gradient de balayage.

5. Système d'entraînement hybride (10) d'un véhicule comprenant un moteur à combustion interne (12), un entraînement électrique (14) ainsi qu'une unité de commande (16) qui est réalisée pour identifier un état dynamique du moteur à combustion interne (12) en déterminant un gradient de balayage et/ou en déterminant le rapport d'air de combustion par la différence entre la quantité d'injection actuelle du moteur à combustion interne (12) et une quantité d'injection limite, en particulier en détectant une chute du rapport d'air de combustion, l'unité de commande (16) étant réalisée pour donner priorité à l'entraînement électrique (14) dans la mesure où un état dynamique a été identifié.

6. Système d'entraînement hybride (10) conforme à la revendication 5, **caractérisé en ce qu'**
il est prévu un système d'injection (18) du moteur à combustion interne (12) avec lequel est reliée l'unité de commande (16).

7. Système d'entraînement hybride (10) conforme à la revendication 6, **caractérisé en ce que**
le système d'injection (18) comporte au moins un capteur (20) qui détecte la quantité d'injection actuelle, la position d'un appareil de guidage, la contrepression des gaz d'échappement et/ou la pression de charge.

8. Système d'entraînement hybride (10) conforme à l'une des revendications 5 à 7,
**caractérisé en ce que**
l'unité de commande (16) est réalisée pour déterminer la différence entre la pression de charge actuelle et une valeur de consigne de la pression de charge.

9. Système d'entraînement hybride (10) conforme à l'une des revendications 5 à 8,
**caractérisé en ce que**
l'unité de commande (16) est réalisée pour déterminer la différence entre le taux de récupération des gaz d'échappement actuel et une valeur de consigne du taux de récupération des gaz d'échappement.

10. Système d'entraînement hybride (10) conforme à l'une des revendications 5 à 9,
**caractérisé en ce que**
l'unité de commande (16) est réalisée pour permettre de mettre en oeuvre un procédé conforme à l'une des revendications 1 à 4.
